# EUROPÄISCHE PATENTSCHRIFT

(11) **EP 0 554 728 B1**
(45) Veröffentlichungstag und Bekanntmachung des Hinweises auf die Patenterteilung: **14.02.1996**
(21) Anmeldenummer: 93100966.6
(22) Anmeldetag: 22.01.1993
(51) Int. Cl.: C08G 18/28, C08G 59/50, C08G 14/12, C09D 133/08, C08G 18/38, C08G 71/02, C08G 73/06

(54) **Bei Raumtemperatur lagerfähige Gemische und ihre Verwendung als Bindemittel in Beschichtungsmitteln**
Mixtures that are storage-stable at room temperature and their use as binders in coating compositions
Mélanges stables en stockage à température ambiante et leur utilisation comme liant dans les compositions de revêtement

(30) Priorität: 04.02.1992 DE 4203085
(43) Veröffentlichungstag der Anmeldung: 11.08.1993
(73) Patentinhaber: BAYER AG, D-51368 Leverkusen (DE)
(72) Erfinder: Schäfer, Walter, Dr., W-5653 Leichlingen (DE); Müller, Hanns Peter, Dr., W-5068 Odenthal-Höffe (DE); Kreuder, Hans-Joachim, Dr., W-4154 Tönisvorst 2 (DE); Bock, Manfred, Dr., W-5090 Leverkusen 1 (DE); Reuter, Knud, Dr., W-4150 Krefeld (DE)

(56) Entgegenhaltungen:
- US-A- 4 996 281
- PATENT ABSTRACTS OF JAPAN, 2 October 1991, abstract volume 015388 ; & JP-A-51 57 421
- DATABASE WPI Week 1192, Derwent Publications Ltd., London, GB; AN 85342 ; & JP-A-4 028 779

## Beschreibung

Die Erfindung betrifft neue Gemische aus cyclische Isoharnstoffgruppen aufweisenden Verbindungen mit organischen Polycarbonsäuren und die Verwendung dieser Gemische als Bindemittel für Hitze-härtbare Beschichtungsmittel.

Eintopf-Zweikomponenten-Systeme sind bekannt. Hierunter sollen solche Lackbindemittel verstanden werden, die aus zwei Einzelkomponenten bestehen, die erst bei erhöhter Temperatur miteinander im Sinne einer Vernetzungsreaktion reagieren und daher bei Raumtemperatur in einem Gebinde vereinigt und gelagert werden können. Zu den bekanntesten derartigen Lacksystemen gehören beispielsweise Kombinationen aus organischen Polyhydroxylverbindungen mit blockierten Polyisocyanaten. Der Nachteil dieser Systeme besteht darin, daß beim Einbrennen der Beschichtung das Blockierungsmittel abgespalten und an die Umwelt abgegeben wird.

Mit der vorliegenden Erfindung werden neue Eintopf-Zwei-komponenten-Lackbindemittel zur Verfügung gestellt, deren Einzelkomponenten aus cyclischen, nachstehend näher beschriebenen Isoharnstoffen und nachstehend näher beschriebenen Polycarbonsäuren bestehen, und die bei Raumtemperatur lagerfähig und bei erhöhter Temperatur vernetzbar sind, ohne daß hierbei irgendwelche Blockierungsmittel abgespalten werden.

Es war nicht zu erwarten, daß die nachstehend näher beschriebenen erfindungsgemäßen Gemische bei Raumtemperatur lagerstabil sind, da in der Literatur bereits beschrieben ist, daß die Umsetzung von Isoharnstoffen mit Carbonsäuren bereits bei Raumtemperatur erfolgt (Chem. Ber. 100, (1967), Seiten 16 bis 22).

Die offengelegte japanische Patentanmeldung mit der Veröffentlichungsnummer JA 91/157 421 beschreibt zwar bereits Hitze-härtbare, cyclische Isoharnstoffe aufweisende Kompositionen, jedoch handelt es sich hierbei um ternäre Gemische, die neben den Isoharnstoffen Polyepoxide und außerdem H-aktive Verbindungen wie beispielsweise Carbonsäuren oder Isocyanate enthalten.

Gegenstand der Erfindung sind bei Raumtemperatur lagerfähige Gemische aus
A) mindestens einer Verbindung mit mindestens zwei cyclischen Isoharnstoffgruppen pro Molekül
   und
B) mindestens einer Verbindung mit mindestens zwei Carboxylgruppen pro Molekül
in, einem Molverhältnis von Isoharnstoffgruppen zu Carboxylgruppen von 0,5:1 bis 1,5:1 entsprechenden Mengen.

Gegenstand der Erfindung ist auch die Verwendung dieser Gemische als Bindemittel für bei erhöhten Temperaturen auszuhärtende Beschichtungsmittel.

Bei der Komponente A) der erfindungsgemäßen Gemische handelt es sich um organische Verbindungen, die pro Molekül mindestens zwei, vorzugsweise 2 bis 4 cyclische Isoharnstoffgruppierungen aufweisen, wobei das Isoharnstoff-Äquivalentgewicht (Molekulargewichtseinheiten pro cyclischer Isoharnstoff-Struktureinheit) im allgemeinen bei 338 bis 2000 liegt. Bei den cyclischen Isoharnstoff-Struktureinheiten handelt es sich um solche der Formeln 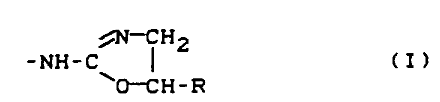 und/oder 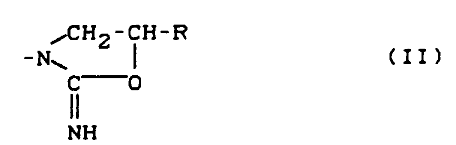 wobei in diesen Formeln
- R: für Wasserstoff, einen Alkylrest mit 1 bis 18, vorzugsweise 1 bis 4 Kohlenstoffatomen, einen Phenyl-, Chlormethyl- oder Phenoxymethylrest steht.

Die Herstellung derartiger Verbindungen A) gelingt beispielsweise durch Umsetzung von cyclischen Isoharnstoffderivaten der Formel 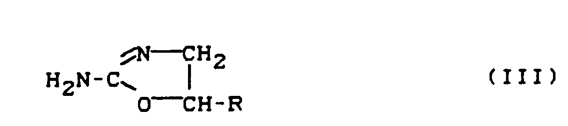 mit polyfunktionellen Verbindungen, die gegenüber Aminogruppen im Sinne einer Additionsreaktion oder Kondensationsreaktion funktionelle Gruppen aufweisen.

Heterocyclische Amine der letztgenannten Formel sind bekannt (Chem. Rev. 71, 483 (1971); Liebigs Ann. Chem. 442, 130) und können aus Cyanamid und Epoxiden der Formel 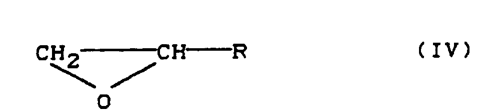 erhalten werden. Diese Reaktion wird im allgemeinen innerhalb des Temperaturbereichs von -10°C bis 25°C in wäßrigem Milieu, vorzugsweise unter Verwendung von überschüssigem Cyanamid durchgeführt.

Geeignete, Aminogruppen aufweisende Verbindungen der Formel (III) sind beispielsweise 2-Amino-4,5-dihydrooxazol, 2-Amino-5-methyl-4,5-dihydrooxazol, 2-Amino-5-ethyl-4,5-dihydrooxazol, 2-Amino-5-octyl-4,5-dihydrooxazol, 2-Amino-5-stearyl-4,5-dihydrooxazol, 2-Amino-5-phenyl-4,5-dihydrooxazol, 2-Amino-5-chlormethyl-4,5-dihydrooxazol oder 2-Amino-5-phenoxymethyl-4,5-dihydrooxazol.

Reaktionspartner für die heterocyclischen Amine der Formel (III) zur Herstellung der erfindungsgemäßen Ausgangskomponenten A) sind
1. organische Polyisocyanate, die mit den Verbindungen der Formel (III) vorzugsweise unter Einhaltung eines NCO/NH₂-Äquivalentverhältnisses von 0,8:1 bis 1,2:1 umgesetzt werden;
2, organische Polyepoxide, die mit den heterocyclischen Aminen vorzugsweise unter Einhaltung eines Äquivalentverhältnisses von Epoxidgruppen zu primären Aminogruppen von 0,8:1 bis 1,2:1 zur Reaktion gebracht werden;
3. Methylol- oder Methoxymethylgruppen aufweisende Melamin- oder Harnstoff-Formaldehyd-Harze, die mit den heterocyclischen Aminen vorzugsweise unter Einhaltung eines Molverhältnisses von Methylol-bzw. Methoxymethylgruppen zu primären Aminogruppen von 0,8:1 bis 1,2:1 zur Reaktion gebracht werden und
4, Carbonsäureestergruppen aufweisende Verbindungen, die ebenfalls vorzugsweise mit den heterocyclischen Aminen unter Einhaltung eines Äquivalentverhältnisses von Estergruppen zu primären Aminogruppen von 0,8:1 bis 1,2:1 umgesetzt werden.

Geeignete Polyisocyanate sind die an sich bekannten aliphatischen, cycloaliphatischen oder araliphatischen Diisocyanate der Polyurethanchemie, z.B, 1,4-Tetramethylendiisocyanat, 1,5-Pentamethylendiisocyanat, 1,6-Hexamethylendiisocyanat, 2,2,4- und 2,4,4-Trimethyl-1,6-diisocyanatohexan, 1,11-Undecamethylendiisocyanat, 1,12-Dodecamethylendiisocyanat, 1,2-Diisocyanatomethylcyclobuten, 1,4-Diisocyanatocyclohexan, Dicyclohexyldiisocyanat, Dicyclohexylmethan-4,4'-diisocyanat, p- und m-Xylylendiisocyanat, 1-Methyl-2,4-diisocyanato-cyclohexan, 1-Methyl-2,6-diisocyanatocyclohexan, 1-Isocyanato-3,3,5-trimethyl-5-isocyanatomethyl-cyclohexan.

Besonders geeignet sind 1-Isocyanato-3,3,5-trimethyl-5-isocyanatomethyl-cyclohexan, Cyclohexan-1,4-diisocyanat, 4,4'-Diisocyanato-dicyclohexylethan, 2,4- und 2,6-Diisocyanato-1-methylcyclohexan-Gemisch 80:20, Hexamethylendiisocyanat, 2,2,4- und 2,4,4-Trimethylhexamethylen-diisocyanat, Oxadiazintriongruppen und/oder Uretdiongruppen, Biuret- oder Isocyanuratgruppen enthaltende Diisocyanate auf Hexamethylendiisocyanat- und 1-Isocyanato-3,3,5-trimethyl-5-isocyanatomethyl-cyclohexan-Basis, sowie auch Mischungen daraus.

Ferner geeignet, jedoch weniger bevorzugt, sind aromatische Polyisocyanate wie 2,4- und/oder 2,6-Diisocyanatotoluol, 2,4'- und/oder 4,4'-Diisocyanatodiphenylmethan oder beliebige Gemische derartiger Diisocyanate. Ebenfalls möglich, jedoch weniger bevorzugt, ist die Verwendung von NCO-Gruppen aufweisenden Präpolymeren aus organischen Polyisocyanaten der beispielhaft genannten Art und unterschiedlichen Mengen an organischen Polyhydroxylverbindungen, vorausgesetzt, die letztendlich resultierenden Verbindungen A) entsprechen den obengenannten Bedingungen bezüglich des Isoharnstoff-Äquivalentgewichts.

Geeignete Polyepoxide sind beliebige organische Verbindungen die pro Molekül mindestens zwei Epoxidgruppen aufweisen, vorausgesetzt, die Umsetzungsprodukte der Polyepoxide mit den heterocyclischen Aminen der Formel (III) entsprechend den obengemachten Angaben bezüglich des Isoharnstoff-Äquivalentgewichts.

Beispiele geeigneter Polyepoxide sind Polyglycidyl- und Polyl(β-methylglycidyl)ester, erhältlich durch Umsetzung von Verbindungen mit zwei oder mehr Carbonsäuregruppen pro Molekül mit Epichlorhydrin, Glycerindichlorhydrin oder β-Methylepichlorhydrin in Gegenwart von Alkali. Solche Polyglycidylester können von aliphatischen Polycarbonsäuren, z.B. Oxalsäure, Bernsteinsäure, Glutarsäure, Adipinsäure, Pimelinsäure, Suberinsäure, Azelainsäure, Sebacinsäure, dimerisierter oder trimerisierter Linolsäure, von cycloaliphatischen Polycarbonsäuren, wie Tetrahydrophthalsäure, 4-Methyltetrahydrophthalsäure, Hexahydrophthalsäure und 4-Methylhexahydrophthalsäure, oder von aromatischen Polycarbonsäuren, wie Phthalsäure, Isophthalsäure und Terephthalsäure, abgeleitet sein.

Weitere Beispiele sind Polyglycidyl- und Poly(β-methylglycidyl)ether, erhältlich durch Umsetzung von Verbindungen mit mindestens zwei freien alkoholischen Hydroxylgruppen und/oder phenolischen Hydroxylgruppen pro Molekül mit geeigneten Epichlorhydrinen unter alkalischen Bedingungen oder aber in Gegenwart von sauren Katalysatoren, gefolgt von einer Behandlung mit Alkali. Solche Ether können aus acyclischen Alkoholen, wie Ethylenglykol, Diethylenglykol und höheren Poly(oxyethylen)-glykolen, Propan-1,2-diol und Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit und Polyepichlorhydrinen von cycloaliphatischen Alkoholen, wie 1,3- und 1,4-Cyclohexandiol, Bis(4-hydroxycyclohexyl)methan, 2,2-Bis(4-hydroxycyclohexyl)propan und 1,1-Bis-(hydroxymethyl)-cyclohex-3-en, sowie von Alkoholen mit aromatischen Kernen, wie N,N-Bis(2-hydroxyethyl)anilin und p,p'-Bis-(2-hydroxymethylamino)-diphenylmethan, abgeleitet sein. Sie können sich auch von einkernigen Phenolen, wie Resorcin und Hydrochinon, und von mehrkernigen Phenolen, wie Bis-(4-hydroxyphenyl)methan, 4,4'-Dihydroxydiphenyl, Bis-(4-hydroxyphenyl)sulfon, 1,1,2,2-Tetrakis-(4-hydroxyphenyl)-ethan, 2,2-Bis-(4-hydroxyphenyl)propan, 2,2-Bis-(3,5-dibrom-4-hydroxyphenyl)propan und Novolaken aus Aldehyden, wie Formaldehyd, Acetaldehyd, Chloral und Furfurylaldehyd, und Phenolen, wie dem unsubstituierten Phenol und Phenolen, die im Ring durch Chloratome oder Alkylgruppen mit bis zu 9 C-Atomen substituiert sind, wie 4-Chlorphenol, 2-Methylphenol und 4-tert.-Butylphenol, ableiten.

Weitere Beispiele von Polyepoxiden sind Verbindungen, die durch Dehydrochlorierung von Umsetzungsprodukten aus Epichlorhydrin und Aminen mit mindestens zwei Aminwasserstoffatomen erhalten werden, wie Anilin, n-Butylamin, Bis-(4-aminophenyl)-methan, m-Xylylendiamin und Bis-(4-methylaminophenyl)methan; Triglycidylisocyanurat und N,N'-Diglycidylderivate von cyclischen Alkylenharnstoffen, wie Ethylenharnstoff und 1,3-Propylenharnstoff, sowie Hydantoinen, wie 5,5-Dimethylhydantoin,

Bevorzugte Epoxidharze sind Polyglycidylether, Polyglycidylester' N,N'-Diglycidylhydantoine und Poly(N-glycidyl)derivate von aromatischen Aminen. Besonders bevorzugte Harze sind Polyglycidylether von 2,2-Bis-(4-hydroxyphenyl)propan oder Bis-(4-hydroxyphenyl)methan, sowie Polyglycidylether von Novolaken aus Formaldehyd und Phenolen mit einem 1,2-Epoxidgehalt von mindestens 0,5 Äquivalenten/kg.

Geeignete Melamin- oder Harnstoff-Formaldehyd-Harze sind beliebige, pro Molekül mindestens zwei Methylolund/oder Methoxymethylgruppen aufweisende Kondensationsprodukte von Melamin oder Harnstoff mit Formaldehyd, vorausgesetzt, die resultierenden Umsetzungsprodukte mit den heterocyclischen Aminen entsprechen den obengemachten Ausführungen bezüglich des Isoharnstoff-Äquivalentgewichts.

Geeignete Carbonsäureestergruppen aufweisende Verbindungen sind beliebige organische Verbindungen, die pro Molekül mindestens zwei Carbonsäureestergruppen auf Basis von leicht flüchtigen aliphatischen Alkoholen aufweisen, vorausgesetzt, die resultierenden Umsetzungsprodukte mit den heterocyclischen Aminen entsprechen den obengemachten Angaben bezüglich des Isoharnstoff-Äquivalentgewichts. Beispielhaft genannt seien Oxalsäuredimethylester, Bernsteinsäuredimethylester, Fumarsäuredimethylester, Bernsteinsäuredimethylester, Terephthalsäuredimethylester Isophthalsäuredimethylester, Acrylsäuremethylester, Methacrylsäuremethylester, C-Caprolacton, γ-Butyrolacton.

Der jeweilige Gehalt an Isoharnstoffgruppen in den Umsetzungsprodukten läßt sich durch Titration mit 1n HCl in DMF als Lösungsmittel (Indikator Bromphenolblau) bestimmen,

Die Umsetzung zwischen den heterocyclischen Aminen der Formel (III) und den beispielhaft genannten, zu Additions- oder Kondensationsreaktionen befähigten Reaktionspartnern erfolgt in an sich bekannter Weise, gegebenenfalls unter Mitverwendung von üblichen, die jeweiligen Additions- oder Kondensationsreaktionen beschleunigenden Katalysatoren.

Bei der Komponente B) der erfindungsgemäßen Gemische handelt es sich um beliebige organische Verbindungen des Molekulargewichtsbereichs 145 bis 20 000, die pro Molekül mindestens zwei Carboxylgruppen bei Säurezahlen von mindestens 28 mg KOH/g aufweisen.

Als Komponente B) besonders gut geeignet sind Carboxylgruppen aufweisende Copolymerisate von olefinisch ungesättigten Carbonsäuren wie beispielsweise Acrylsäure, Methacrylsäure, Fumarsäure und/oder Maleinsäure mit anderen olefinisch ungesättigten Monomeren. Andere olefinisch ungesättigte Monomere sind insbesondere Alkylacrylate oder -methacrylate mit 1 bis 10 Kohlenstoffatomen im Alkylrest, wie Methyl-, Ethyl-, n-Propyl-, die isomeren Propyl-, die isomeren Butyl-, die isomeren Octyl-, oder die isomeren Hexylacrylate oder -methacrylate, Styrol, Acrylnitril oder auch Hydroxyalkyl-acrylate oder -methacrylate mit 2 bis 4 Kohlenstoffatomen im Alkylrest bzw. beliebige Gemische derartiger Monomerer.

Die Copolymerisate weisen im allgemeinen ein mittels der Gelpermeationschromatographie bestimmbares Molekulargewicht Mn von 2000 bis 15 000 und Säurezahlen von 70 bis 160 mg KOH/g auf.

Als Komponente B) ebenfalls geeignet sind beispielsweise Umsetzungsprodukte von intramolekularen Carbonsäureanhydriden wie Maleinsäureanhydrid oder Phthalsäureanhydrid mit organischen Polyhydroxylverbindungen im Sinne einer ringöffnenden Esterbildungsreaktion, soweit die resultierenden Umsetzungsprodukte den gemachten Angaben bezüglich des Carboxylgruppengehalts und der Carboxyl-Funktionalität entsprechen.

Als Komponente B) weiterhin geeignet sind beispielsweise einfache Polycarbonsäuren wie Adipinsäure, Sebacinsäure, Phthalsäure, Hexahydrophthalsäure, sowie dimere oder trimere Fettsäuren oder beliebige Gemische der beispielhaft genannten Polycarbonsäuren.

In den erfindungsgemäßen Gemischen liegen die Komponenten A) und B) in solchen Mengen vor, daß auf jede Isoharnstoffgruppe 0,5 bis 1,5, vorzugsweise 0,8 bis 1,2 Carboxylgruppen entfallen.

Die Gemische eignen sich als Hitze-härtbare Bindemittel für lösungsmittelhaltige Lacke oder für Pulverlacke, letzteres vorausgesetzt, die Gemische sind bei 30°C fest und oberhalb 120°C flüssig.

Zur Herstellung von Pulverlacken auf Basis der erfindungsgemäßen Gemische kann beispielsweise so vorgegangen werden, daß die Einzelkomponenten gemeinsam kurzzeitig, ohne nennenswerte Vernetzungsreaktion, durch Erhitzen in den flüssigen Zustand überführt werden, als Flüssigkeit intensiv durchmischt und anschließend abgekühlt werden, worauf sich die Pulverisierung des so hergestellten intensiven Gemischs zum Pulverlackbindemittel anschließt.

Zur Herstellung von lösungsmittelhaltigen Lacken eignen sich Lösungsmittel wie beispielsweise Toluol, Xylol, Methanol, Ethanol, Isopropanol, die isomeren Butanole, Ethylacetat, Butylacetat, Methoxypropylacetat, Tetrahydrofuran, Dimethylformamid, N-Methylpyrrolidon oder Gemische derartiger Lösungsmittel.

Den Lacken können gewünschtenfalls auch geeignete Katalysatoren zugesetzt werden, die die zwischen Carboxylgruppen und Isoharnstoffgruppen ablaufende Vernetzungsreaktion beschleunigen. Hierzu gehören beispielsweise organische Zinn-, Zink- oder Kupferverbindungen, insbesondere jedoch p-Toluolsulfonsäuremethylester oder p-Toluolsulfonsäure.

Den erfindungsgemäßen Gemischen bzw. den aus ihnen hergestellten Lacken können die üblichen Hilfs- und Zusatzmittel der Lacktechnologie wie beispielsweise Pigmente, Verlaufhilfsmittel, Lichtschutzmittel u.dgl. einverleibt werden.

Die erfindungsgemäßen Beschichtungsmittel werden im allgemeinen in solchen Mengen nach üblichen Methoden der Beschichtungstechnologie aufgebracht, daß Trockenfilmstärken von 5 bis 200 µm resultieren. Geeignete Substrate sind beliebige Hitze-resistente Substrate wie beispielsweise Metalle, Hitze-resistente Kunststoffe, mineralische Substrate wie beispielsweise Stein oder Beton oder Glas.

Erfindungsgemäße Pulverlacke können nach dem elektrostatischen Pulverspritzverfahren (EPS-Verfahren) appliziert werden.

Die Aushärtung der Beschichtungen auf Basis der erfindungsgemäßen Gemische erfolgt im allgemeinen innerhalb des Temperaturbereichs von 120 bis 200, vorzugsweise 140 bis 180°C.

In den nachfolgenden Beispielen beziehen sich alle Prozentangaben auf das Gewicht.

Die nachfolgenden Beispiele 1 bis 7 zeigen die Herstellung von erfindungsgemäß geeigneten Komponenten A).

### Beispiel 1

Zu 331 g (3,3 Mol) 2-Amino-5-methyl-4,5-dihydrooxazol werden unter Stickstoff 632,6 g (3,3 Mol NCO) eines trimerisierten Hexamethylendiisocyanats so zugetropft, daß die Temperatur 70°C nicht übersteigt. Nachdem die Reaktionsmischung 0,5 Stunden bei 70°C nachgerührt wurde, wird die Temperatur auf 120°C erhöht und 3 Stunden unter Vakuum gehalten. Es entsteht ein sprödes Produkt vom Schmp. 70 bis 80°C, das ein Äquivalenzgewicht von 339 g pro Mol Isoharnstoffgruppe hat.

### Beispiel 2

Zu einer Lösung aus 100 g (1,0 Mol) 2-Amino-5-ethyl-4,5-dihydrooxazol, gelöst in 250 ml Toluol, werden 84 g (0,5 Mol) Hexamethylendiisocyanat so zugetropft, daß die Temperatur 35°C nicht übersteigt, Die Reaktionslösung wird danach noch eine Stunde bei 70°C gerührt und anschließend vom Toluol bei 12 mbar/50°C befreit. Es kristallisiert ein Produkt vom Schmp. 130°C aus. Nach Titration hat das Produkt ein Äquivalenzgewicht von 198 g pro Mol Isoharnstoffgruppe.

### Beispiel 3

Zu 200 g (2 Mol) 2-Amino-5-methyl-4,5-dihydrooxazol, gelöst in 500 ml Xylol, werden 262 g (1 Mol) 4,4-Diisocyanato-dicyclohexylmethan so zugetropft, daß die Temperatur 70°C nicht übersteigt. Nachdem eine Stunde nachgerührt wurde, erhitzt man die Reaktionsmischung für 3 Stunden auf 120°C, wobei sich 2 Phasen bilden. Nach dem Einengen bei 120°C, 1 bis 2 mbar, fällt ein sprödes Produkt vom Schmp. 170°C an. Das Äquivalenzgewicht ist 230 g pro Mol Isoharnstoffgruppe.

### Beispiel 4

Zu 100 g (1,0 Mol) 2-Amino-5-methyl-4,5-dihydrooxazol werden unter Kühlen mit Eiswasser 280 g (1,1 Mol NCO) eines Trimerisats auf Basis von Isophorondiisocyanat, gelöst in 33 g ^{®}Solvesso zugetropft, dann wird 0,5 Stunden bei 70°C nachgerührt. Nach dem Abdestillieren des Lösungsmittels bei 90 bis 120°C und bei einem Druck von 0,5 bis 1 mbar erhält man ein sprödes Produkt von Schmp. 130 bis 150°C und mit einem Äquivalenzgewicht von 610 g pro Mol Isoharnstoffgruppe.

### Beispiel 5

In 180 g eines Diglycidylethers vom Bisphenol A (Epoxidäquivalentgewich = 180), gelöst in 500 ml Xylol, werden 200 g (2,0 Mol) 2-Amino-5-methyl-4,5-dihydrooxazol gegeben und innerhalb von einer Stunde auf 120 bis 130°C aufgeheizt. Nach einer Stunde Nachrühren wird die überstehende Xylolphase abdekantiert und anschließend die untere Phase vom restlichen Xylol bei 100 bis 120°C, 1 bis 2 mbar befreit. Man erhält ein sehr viskoses Harz mit einem Äquivalenzgewicht von 295 g pro Mol Isoharnstoffgruppe.

### Beispiel 6

In 72 g (1,0 Mol CH₂-OCH₃) eines Melamin-Formaldehydharzes werden 100 g (1,0 Mol) 2-Amino-5-methyl-4,5-dihydrooxazol gegeben und in Gegenwart von einem ml Ameisensäure für 0,5 Stunden auf 125°C erhitzt. Man erhält ein farbloses viskoses Harz eines Äquivalenzgewichts von 221 g pro Mol Isoharnstoffgruppe.

### Beispiel 7

300 g (3,0 Mol) 2-Amino-5-methyl-4,5-dihydrooxazol werden mit 343 g (3,0 Mol) ε-Caprolacton bei RT zusammengegeben und anschließend eine Stunde auf 120°C erhitzt.

250 g (1,1 Mol OH) des so hergestellten Addukts und 250 ml Dimethylformamid werden zu 150 g (1,1 Mol NCO) 4,4'-Diisocyanato-dicyclohexylmethan bei 70°C zugetropft. Nach Erreichen einer Temperatur von 110°C wird die Reaktionsmischung solange gerührt, bis keine NCO-Bande im IR-Spektrum mehr festzustellen ist.

### Beschichtung 1

Zu 40 g eines Carboxylgruppen aufweisenden Copolymerisats einer Säurezahl von 85,7 mg KOH/g aus 48 % Methylmethacrylat, 41 % 2-Ethylhexylacrylat und 11 % Acrylsäure, gelöst in 25 g n-Butylacetat, werden 10 g des Isoharnstoffs aus Beispiel 1, gelöst in 23 g Methoxyethanol, gegeben. Die lagerbeständige Mischung, aufgerakelt auf eine Glasplatte, gibt bei 155°C/30 Min. eingebrannt einen glänzenden, acetonbeständigen Film.

Die gleiche Lösung nach 2 Wochen aufgerakelt liefert bei 155°C/30 Min. eingebrannt das gleiche Ergebnis.

### Beschichtung 2

Zu 30 g des Carboxylgruppen aufweisenden Copolymerisats gemäß Beschichtung 1, gelöst in 20 g Butylacetat, werden 14 g des Isoharnstoffs aus Beispiel 5, gelöst in 14 g Methoxyethanol gegeben. Die lagerbeständige Mischung, aufgerakelt auf eine Glasplatte, gibt bei 155°C/30 Min. eingebrannt einen glänzenden, acetonbeständigen Film: Die gleiche Lösung nach 2 Wochen aufgerakelt liefert bei 155°C/30 Min. eingebrannt das gleiche Ergebnis.

### Beschichtung 3

Zu 45 g eines Carboxylgruppen aufweisenden Copolymerisats einer Säurezahl von 123,9 mg KOH/g aus 17 % Methylmethacrylat, 64 % n-Butylacrylat und 19 % Methacrylsäure, gelöst in 50 g Dimethylformamid, werden 23 g des Isoharnstoffs aus Beispiel 3, gelöst in 100 g einer Mischung aus Methoxyethanol und Dimethylformamid 1:3, gegeben. Die Mischung wird auf 120°C erhitzt und nach dem Abkühlen auf RT auf eine Glasplatte aufgerakelt. Nach dem Einbrennen bei 155°C/30 Min. erhält man einen schwach matten, acetonbeständigen Film.

### Beschichtung 4

Zu 45 g des Carboxylgruppen aufweisenden Copolymerisats gemäß Beschichtung 3, gelöst in 50 g Dimethylformamid, werden 59 g der Isoharnstofflösung aus Beispiel 7 gegeben. Die lagerbeständige Mischung, aufgerakelt auf eine Glasplatte, gibt bei 155°C/30 Min. eingebrannt einen glänzenden, acetonbeständigen Film.

### Beschichtung 5

Zu 22 g des Carboxylgruppen aufweisenden Copolymerisats gemäß Beschichtung 3, gelöst in 25 g Dimethylformamid, werden 10 g des Isoharnstoffs aus Beispiel 6, gelöst in 10 g Methoxyethanol, gegeben. Die lagerbeständige Mischung, aufgerakelt auf eine Glasplatte, gibt bei 155°C/30 Min. eingebrannt einen glänzenden, acetonbeständigen Film.

## Patentansprüche

1. Bei Raumtemperatur lagerfähige Gemische aus
A) mindestens einer Verbindung mit mindestens zwei cyclischen Isoharnstoffgruppen pro Molekül
und
B) mindestens einer Verbindung mit mindestens zwei Carboxylgruppen pro Molekül
in einem Molverhältnis von Isoharnstoffgruppen zu Carboxylgruppen von 0,5:1 bis 1,5:1 entsprechenden Mengen.

2. Gemische gemäß Anspruch 1, dadurch gekennzeichnet, daß die Komponente A) aus Verbindungen besteht, die pro Molekül insgesamt mindestens zwei Struktureinheiten der Formeln 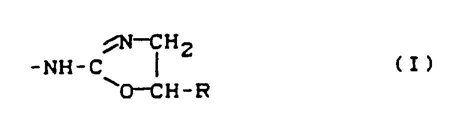 und/oder 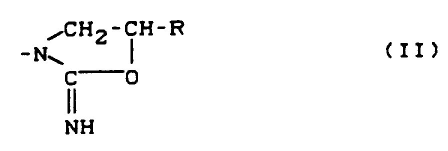 aufweisen, wobei
R in diesen Formeln für Wasserstoff, einen Alkylrest mit 1 bis 18 Kohlenstoffatomen, einem Phenyl-, Chlormethyl- oder Phenoxymethylrest steht.

3. Gemische gemäß Anspruch 1 und 2, dadurch gekennzeichnet, daß die Komponente B) aus Copolymerisaten von olefinisch ungesättigten Carbonsäuren mit anderen olefinisch ungesättigten Monomeren besteht und eine Säurezahl von mindestens 28 mg KOH/g aufweist.

4. Verwendung der Gemische gemäß Anspruch 1 bis 3 als Bindemittel für bei erhöhten Temperaturen auszuhärtende Beschichtungsmittel.

## Claims

1. Mixtures storable at room temperature, consisting of
A) at least one compound having at least two cyclic isourea groups per molecule,
and
B) at least one compound having at least two carboxyl groups per molecule,
in amounts corresponding to a molar ratio of isourea groups to carboxyl groups of 0.5:1 to 1.5:1.

2. Mixtures according to Claim 1, characterized in that component A) consists of compounds having a total of at least two structural units of the formulae 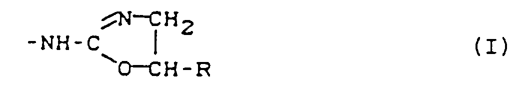 and/or 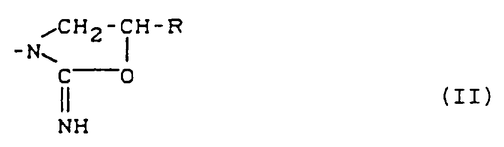 per molecule, in which formulae
R is hydrogen, an alkyl radical having 1 to 18 carbon atoms, or a phenyl, chloromethyl or phenoxymethyl radical.

3. Mixtures according to Claims 1 and 2, characterized in that component B) consists of copolymers of olefinically unsaturated carboxylic acids with other olefinically unsaturated monomers and has an acid number of at least 28 mg KOH/g.

4. Use of the mixtures according to Claims 1 to 3 as binders for coating compositions curing at elevated temperatures.

## Revendications

1. Mélanges susceptibles d'être conservés à température ambiante, constitués de:
A) au moins un composé comportant au moins deux groupes isocarbamide ou iso-urée cycliques par molécule
et
B) au moins un composé comportant au moins deux groupes carboxyle par molécule
dans des quantités correspondant à un rapport molaire des groupes isocarbamide aux groupes carboxyle de 0,5:1 à 1,5:1.

2. Mélanges selon la revendication 1, caractérisés en ce que le composant A) est constitué de composés qui, par molécule, présentent en tout au moins deux unités structurelles des formules 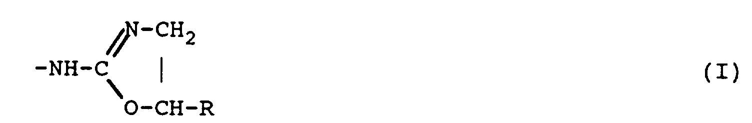 et/ou 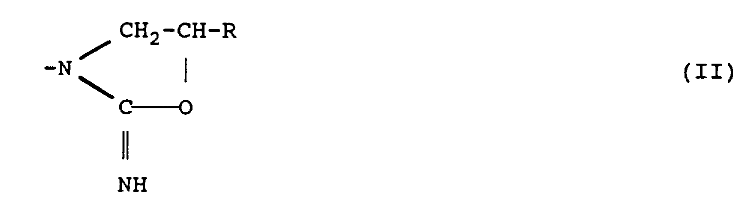 tandis que
R représente l'hydrogène, un radical alkyle présentant de 1 à 18 atomes de carbone, un radical phényle, chlorométhyle ou phénoxyméthyle.

3. Mélanges selon la revendication 1 et 2, caractérisés en ce que le composant B) est constitué de copolymérisats d'acide carboxylique à insaturation oléfinique avec d'autres monomères à insaturation oléfinique, et présente un indice d'acide d'au moins 28 mg KOH/g.

4. Utilisation des mélanges selon la revendication 1 à 3 comme liants pour des revêtements durcissant à température élevée.
